(19) Europäisches Patentamt
European Patent Office
Office européen des brevets

(11) **EP 2 623 802 A1**

(12) **EUROPEAN PATENT APPLICATION**
published in accordance with Art. 153(4) EPC

(43) Date of publication:
07.08.2013 Bulletin 2013/32

(51) Int Cl.:
*F16C 33/44* (2006.01)  *C08G 73/10* (2006.01)
*C08J 5/04* (2006.01)  *F16C 19/06* (2006.01)
*F16C 19/26* (2006.01)  *F16C 33/56* (2006.01)

(21) Application number: 11829165.7

(22) Date of filing: 28.09.2011

(86) International application number:
PCT/JP2011/072155

(87) International publication number:
WO 2012/043612 (05.04.2012 Gazette 2012/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.02.2011  JP 2011041992
29.09.2010  JP 2010219548
28.09.2010  JP 2010217697

(71) Applicant: NTN Corporation
Osaka-shi, Osaka 550-0003 (JP)

(72) Inventors:
• HIMENO, Yoshihide
Mie 5110867 (JP)

• UCHIYAMA, Eriko
Mie 5110867 (JP)
• OOHIRA, Kouya
Mie 5110867 (JP)

(74) Representative: White, Duncan Rohan
Marks & Clerk LLP
Fletcher House
Heatley Road
The Oxford Science Park
Oxford OX4 4GE (GB)

(54) **RETAINER FOR ROLLING BEARING, AND ROLLING BEARING**

(57)    It is an object of the present invention to provide a rolling bearing which can be used in conditions in which a DN value is not less than 1,500,000 and an operating temperature is not less than 200°C and which can be securely operated for a sufficiently long period of time without seizing, even though the rolling bearing is used in a dry run state and a cage for the rolling bearing. A cage (1) is formed by molding a carbon fiber composite material composed of a matrix consisting of a high-molecular compound reinforced with a carbon fiber material. The carbon fiber material consists of a bundle of 1000 to 5000 monofilaments, a woven cloth or a unidirectional material consisting of the bundle of the monofilaments. The high-molecular compound is polyimide resin or the like whose glass transition temperature is not less than 200°C after the high-molecular compound thermally hardens.

Fig. 1

EP 2 623 802 A1

**Description**

TECHNICAL FIELD

The present invention relates to a resin cage for a rolling bearing and the rolling bearing which incorporates the cage and is used in conditions in which it is operated at a high speed and a high temperature. More particularly, the present invention relates to a rolling bearing, for an airplane, which is used by rotating it at a high speed in a dry run state.

BACKGROUND ART

Each part of a jet engine of an airplane is demanded to be lightweight to a very high extent to improve the fuel cost thereof. For example, a cage for a bearing which is used for parts such as the main shaft of the jet engine rotating at a high temperature and a high speed is demanded to be altered from a metallic cage to a resin cage. But it is difficult to use the resin cage for a rolling bearing for the main shaft of the jet engine which is used in conditions in which a DN value is not less than 1,500,000 and an operating temperature is not less than 200°C.

As a cage which is used for a touch-down rolling bearing of a magnetic bearing apparatus and has a sufficient strength when a shaft rotates at a high speed, a known cage is composed of the synthetic matrix resin and the strength-enhancing resin fibers such as long aramid fibers mixed therewith in the state in which the resin fibers are arranged in the direction intersecting with the axial direction of the shaft (patent document 1). In this cage, according to the disclosure, by circumferentially winding the fibers having a high tensile modulus of elasticity, it is possible to prevent the cage from circumferentially deforming when the bearing rotates.

As a cage for a rolling bearing which is used by rotating it at a high speed to support the main shaft, of the jet engine of the airplane or the like, which is rotated at a high speed, the known cage consists of the organic fiber reinforced plastic composed of the thermosetting resin integrated with the woven fabric consisting of organic fibers such as the para-based aramid fiber, the polyarylate fiber or the poly para phenylene benzobisoxazole fiber having a tensile strength of not less than 2 GPa and a tensile modulus of elasticity of not less than 50 GPa (patent document 2) .

According to a known method of producing the fiber reinforced polyimide composite material, after the fabric of carbon fibers plainly woven by the liquid molding method is impregnated with the imide oligomer solution in which the addition-type phenylethynyl terminated imide oligomer is dissolved in the organic solvent at not less than 20% in the weight ratio, the organic solvent is volatilized. Thereafter the imide oligomer is subjected to the addition reaction (patent document 3).

There are cases in which rolling bearings incorporated in the engine of the airplane and in a transmission are used by rotating them at a high speed in a so-called dry run state in which the supply of lubricating oil is cut and only a very small amount of oil which has attached to the rolling bearing in an early stage of an operation is present. The rolling bearings used in the dry run state are demanded to be operated without seizing for a certain period of time, for example, several tens of seconds to several tens of minutes.

In the rolling bearing which is used by rotating it at a high speed in the dry run state, a bearing ring guide form is often adopted as the cage guide form. In this guide form, seizing is liable to occur between the cage which makes a sliding contact with the cage guide surface of the bearing ring and the cage guide surface thereof rather than between the rolling elements which make rolling contacts with the raceway surface of the bearing ring and the raceway surface thereof. As a means for preventing the seizing from occurring between the cage and the cage guide surface of the bearing ring, the means for forming the silver-plated film which is the self-lubricating film on the inside diameter surface of the outer ring serving as the cage guide surface or the outside diameter surface of the inner ring, on the outside and inside diameter surfaces of the cage which slide on the cage guide surface of the bearing ring, and on the surfaces of the pockets which contact the rolling elements (non-patent document 1). Recently as the self-lubricating film, the phosphate film is formed on the above-described portions. According to a known art, the electroless nickel composite plated film containing the powder of tetrafluoroethylene resin is formed on the cage of the rolling bearing which is used in an unlubricating condition (patent document 4).

PRIOR ART DOCUMENT

PATENT DOCUMENT

Patent document 1: Japanese Utility Model Application Laid-Open No. 5-8042
Patent document 2: Japanese Patent Application Laid-Open No. 2010-1971
Patent document 3: Japanese Patent Application Laid-Open No. 2006-117788

Patent document 4: Japanese Patent Application Laid-Open No. 2004-332899

NON-PATENT DOCUMENT

Non-patent document 1: Rolling Bearing Engineering Editorial Committee,"Rolling Bearing Engineering",third edition, Youkendou, published in January of 1978, 362 pages

SUMMARY OF THE INVENTION

PROBLEMS TO BE SOLVED BY THE INVENTION

In the case where the cage is used for the bearing for the main shaft of the jet engine and the like which rotates at a high temperature and a high speed, the elastic modulus greatly decreases from the neighborhood of the glass transition temperature of the resin composing the organic fiber such as the aramid fiber or the poly para phenylene benzobisoxazole used for the cage. Therefore such a cage cannot be used for the bearing which is used at a high temperature.

The synthetic matrix resin composing the cage has a problem that in dependence on the kind of resin, it has a low elastic modulus at high temperatures and is short in its heat resistance. Fabric composed of plainly woven carbon fibers is used has a problem that the fabric is not sufficiently impregnated with resin, and the cage composed of such a fabric is incapable of obtaining a mechanical strength and heat resistance to such an extent that the cage can be used for a bearing for a part such as the main shaft of the jet engine which rotates at a high temperature and a high speed.

In the sheet winding method disclosed in the patent document 2, in molding a thick pipe having a thickness not less than 7mm at its one side to produce the cage, the outer circumferential side of the pipe wrinkles owing to the flow of the resin and cure shrinkage. With the generation of the wrinkle, the outer circumferential side of the pipe does not have its circumferential strength and elastic modulus. Thus the cage produced by the sheet winding method has a problem that the cage is broken at an applied load lower than a designed load value.

In the cage of the non-patent document 1 where the silver-plated film is formed, the silver-plated film is preferable in that it has a very excellent affinity for the base material of the cage and a high seizing resistance and is thus capable of prolonging the life of the rolling bearing which is operated in the dry run state. Thus the silver-plated film is a preferable surface treatment. To improve the seizing resistance and oxidation deterioration of the lubricating oil for lubricating the bearing, the lubricating oil contains an additive containing sulfur such as sulfurized fats and oils, zinc dialkyldithiophosphate or the like. These additives generate active sulfur compounds at the step of preventing seizing or at the step of preventing the oxidation deterioration of the lubricating oil. When the sulfur compounds contact the plated silver, a chemical reaction takes place to form silver sulfide which coats the surface of the silver-plated film. The silver sulfide is more frail than silver. Therefore the silver-plated film peels off the surfaces of the cage and is inferior in its oil resistance. Thus the film is melted by the lubricating oil. As a result, there is an increase in the friction between the cage from which the silver-plated film has disappeared and the bearing ring. Thus seizing is liable to occur.

In the rolling bearing of the patent document 4 where the self-lubricating film consisting of the phosphate film is formed, when the lubricating oil is sufficiently present thereon, the self-lubricating film allows the lubricating oil to be easily held on the surface of the cage and has the effect of decreasing friction. But the self-lubricating film wears immediately in a strict condition such as the dry run state and loses its lubricating effect in a short period of time. The electroless nickel composite-plated film containing the powder of the tetrafluoroethylene resin formed on the cage shows a certain degree of performance in a low-speed condition even though the lubricating oil is not supplied thereto. But there is a case in which the electroless nickel composite-plated film is incapable of maintaining its lubricating performance in the case where it is used for the cage of the rolling bearing, for the airplane, which is operated at a high speed.

The present invention has been made to deal with the above-described problems. Therefore it is an object of the present invention to provide a rolling bearing which can be used in conditions in which a DN value is not less than 1,500,000 and an operating temperature is not less than 200°C and which can be securely operated for a sufficiently long period of time without seizing even though the rolling bearing is used in a dry run state and a cage for the rolling bearing.

MEANS FOR SOLVING THE PROBLEMS

The cage of the present invention for a rolling bearing is formed by molding a carbon fiber composite material composed of a matrix consisting of a high-polymer compound reinforced with a carbon fiber material. The carbon fiber material consists of a bundle of 1000 to 5000 monofilaments, a woven cloth or a unidirectional material both consisting of the bundle of the monofilaments. The high-polymer compound is a thermosetting resin.

The glass transition temperature of the thermosetting resin is not less than 200°C after the thermosetting resin thermally hardens. The thermosetting resin is imide resin which contains an aromatic imide bond in a molecule thereof or epoxy resin to be hardened an epoxy ring-containing resin component with an acid anhydride component.

A bending strength of the carbon fiber composite material composed of the matrix consisting of the high-polymer compound reinforced with the carbon fiber material at 25°C is set to not less than 600 MPa. A bending strength retention rate thereof at 200°C is set to not less than 50% of a value of the bending strength value thereof at 25°C. An elastic modulus of the carbon fiber composite material at 25°C is set to not less than 35 GPa. An elastic modulus retention rate thereof at 200°C is set to not less than 50% of a value of the elastic modulus thereof at 25°C.

The cage is formed by molding the carbon fiber composite material by using a resin transfer molding method (hereinafter referred to as RTF method).

A rolling bearing of the present invention has an inner ring, an outer ring, a plurality of rolling elements interposed between the inner ring and the outer ring, and a cage retaining the rolling elements. The rolling bearing is used in conditions in which a DN value is not less than 1,500,000 and an operating temperature is not less than 200°C. The rolling bearing is used for a main shaft of a jet engine mounted on an airplane.

In the rolling bearing, a surface roughness of a pocket of the cage which slides on the rolling elements is set to not less than 0.8 μmRa nor more than 6.5 μmRa. A surface roughness of at least one surface selected from among inside and outside surfaces of the cage is set to not less than 0.8 μmRa nor more than 6.5 μmRa.

EFFECT OF THE INVENTION

The cage of the present invention, for the rolling bearing, is formed by molding the carbon fiber composite material composed of the thermosetting resin, specifically the imide resin, having a glass transition temperature of not less than 200°C, which is reinforced with the bundle of 1000 to 5000 fibers or the woven cloth consisting of the bundle of the fibers. Therefore the resin of the carbon fiber composite material impregnates into the woven cloth to a high extent. Thereby the carbon fiber composite material has little defects that cause the degree of the adhesion between the fibers to become low and woven cloth layers to peel from each other. Thereby the cage of the present invention for the bearing can be used in high-speed and high-temperature conditions in which the DN value is not less than 1,500,000 and the operating temperature is not less than 200°C.

Because the cage formed by using the RTF method is used in the present invention, the resin of the carbon fiber composite material impregnates into the woven cloth to a high extent. Thus the present invention provides the carbon fiber composite material having little defects. Because the cage is formed by using the RTF method, even in the case where a thick circular ring such as the cage is formed, it is possible to mold the carbon fiber composite material without forming wrinkles on the outside diameter surface side.

The matrix resin is used for the cage. Thus the cage has an affinity for the rolling element. Because only a very small amount of oil which has attached to the cage can be effectively utilized, a low friction is generated between the cage and the rolling element. The matrix resin is inactive and thus does not react with the sulfur-based additive contained in the lubricating oil. Therefore the matrix resin maintains its excellent lubricating property for a long time without being consumed while the rolling bearing is in operation. The matrix resin prevents metallic contact between the bearing ring and the surface of the cage. Thus even though the rolling bearing is used in the dry run state, the rolling bearing can be securely operated for a sufficiently long operational period of time without seizing.

BRIEF DESCRIPTION OF THE DRAWINGS

Fig. 1 is perspective view of a cage which is an example of the cage of the present invention for a rolling bearing.
Fig. 2 is a sectional view of a deep groove ball bearing which is an example of a rolling bearing of the present invention.
Fig. 3 is a sectional view of a rolling bearing which is another example of the rolling bearing of the present invention.
Fig. 4 is a sectional view of a rolling bearing which is still another example of the rolling bearing of the present invention.
Fig. 5 is a sectional view of a molding machine.
Fig. 6 shows a friction testing machine.
Fig. 7 shows a change of the friction coefficient of a flat plate specimen shown in an example C-1 with time.
Fig. 8 shows a change of the friction coefficient of a flat plate specimen shown in a comparative example C-1 with time.
Fig. 9 shows a change of the friction coefficient of a flat plate specimen shown in a comparative example C-3 with time.
Fig. 10 shows a change of the friction coefficient of a flat plate specimen shown in a comparative example C-10 with time.

MODE FOR CARRYING OUT THE INVENTION

The cage of the present invention for the rolling bearing is obtained by molding a carbon fiber composite material composed of a high-polymer compound, serving as the matrix thereof, which is reinforced with a carbon fiber material.

It is preferable that the high-polymer compound (resin), serving as the matrix of the carbon fiber composite material, which can be used in the present invention has an affinity for the carbon fiber material. As examples of the matrix resin having such properties, thermosetting resins such as phenol resin, furan resin, bismaleimide resin, bismaleimide triazine resin, polyamino bismaleimide resin, epoxy resin, aromatic polyimide resin; and thermoplastic resins such as polyphenylene ether resin, polyphenylene sulfide resin, polysulfone resin, polyether sulfone resin, polyether imide resin, thermoplastic polyimide resin, aromatic polyamide imide resin, polybenzimidazole resin, polyether ketone resin, polyether nitrile resin, fluororesin, and aromatic polyester resin are listed. For aerospace application of resins, as resins suitable for uses in which a bearing for the main shaft of an engine is demanded to have a high heat resistance such as soak back, bismaleimide resin, aromatic polyimide resin, polyether ether ketone resin, and polybenzimidazole resin are preferable.

It is preferable that the high-polymer compound, serving as the matrix of the carbon fiber composite material, which can be used in the present invention is the thermosetting resin. The thermosetting resin includes a resin (a) which forms a three-dimensional network structure as a result of a hardening reaction and a resin (b) which becomes insoluble and infusible as a result of heat treatment or chemical treatment after it is molded. As an example of the resin (a), the above-described epoxy resin is exemplified. As an example of the resin (b), the above-described aromatic polyimide resin converted from aromatic polyamic acid is exemplified.

Of the epoxy resins, an epoxy resin to be cured an epoxy ring-containing resin component with an acid anhydride component is preferable. This is because the epoxy resin formed by curing the epoxy ring-containing resin component with the acid anhydride has a lower thermal contraction after it cures and a more excellent heat resistance than an epoxy resin cured with amine.

Of acid anhydrides, liquid acid anhydrides are preferable. As the liquid acid anhydrides, 2,4-diethylglutaric anhydride, methyl endo-methylene-tetrahydrophthalic anhydride, and methyl tetrahydrophthalic anhydride are listed. Of these liquid acid anhydrides, the 2,4-diethylglutaric anhydride is preferable for the RTF method because it is low in its viscosity and excellent in its impregnation performance.

The epoxy resin cured with the acid anhydride can be used in combination with an addition-type imide resin to be described later.

The imide resin which can be preferably used in the present invention contains an aromatic imide bond in its molecule and has a glass transition temperature of not less than 200°C and preferably not less than 240°C after it thermally hardens. When the glass transition temperature of the imide resin is less than 200°C, the cage containing the imide resin is liable to thermally deform when it is in operation.

Herein the glass transition temperature is a value determined by the following method by using a viscoelasticity analysis apparatus. Initially by thermally hardening each resin in its optimum condition, flat plate specimens having the length of 40mm, the width of 10mm, and the thickness of 1mm were formed. Thereafter for evaluation in a three-point bending form (distance between marked lines is 20mm), the specimens were set inside the viscoelasticity analysis apparatus (DMS6110 produced by SII Corporation). The temperature was raised at a temperature-raising speed of 2°C per minute from -50°C to 400°C in an air atmosphere to determine a loss elastic modulus (E") and a storage elastic modulus (E') with respect to a temperature when a load was applied to the specimens at a frequency of 0.5 Hz. The temperature at which the value (tan $\delta$) obtained by dividing the loss elastic modulus by the storage elastic modulus becomes a local maximum value is set as the glass transition temperature.

"Containing the aromatic imide bond in its molecule" in the imide resin containing the aromatic imide bond in its molecule includes a case in which an imide ring containing adjacent carbon atoms forming an aromatic ring is formed and/or a case in which the imide ring containing nitrogen atoms and carbon atoms directly bonding to the aromatic ring is formed. Polyimide oligomer resins which contain the aromatic imide bond in the molecules thereof and have unsaturated bonds in the molecules thereof or at the molecular ends thereof are also preferable.

The imide resin containing the aromatic imide bond in its molecule includes the addition-type imide resin. Bismaleimide resin is exemplified as the addition-type imide resin.

As the bismaleimide resin, it is possible to use various kinds of monomers commercially available in combination. It is possible to exemplify BM1-1000, BM1-2000, BM1-3000, BM1-4000, BM1-5000, and BM1-7000 all produced by Daiwa Kasei Industry Co., Ltd.; and Imidaloy KIR-30 produced by KYOCERA Chemical Corporation. As resins containing the bismaleimide, bismaleimide triazine resin (produced by MITSUBISHI GAS CHEMICAL COMPANY INC.) is exemplified.

The imide resin containing the aromatic imide bond in its molecule also includes aromatic polyimide oligomer resin. The aromatic polyimide oligomer resin is capable of containing an aromatic polyamic acid oligomer component in a range in which the content of the aromatic polyamic acid oligomer component does not impair the solubility thereof.

As the aromatic polyimide oligomer resin containing the aromatic imide bond in its molecule, asymmetric imide structure which becomes non-flat plate in each aromatic ring plates to be delivered from a three-dimensional structure in which the molecular chains are bent and twisted. The high-polymer compound containing the asymmetric imide resin is excellent in its moldability. Asymmetric aromatic polyimide oligomer resin is especially preferable.

As the asymmetric aromatic polyimide oligomer resin, an imide resin containing a biphenyl-tetracarboxylic acid anhydride is exemplified. For example, powdery asymmetric aromatic polyimide oligomer resin is obtained by combining an asymmetric tetracarboxylic acid anhydride such as 2,3,3', 4'-biphenyl-tetracarboxylic acid anhydride, aromatic diamine, and 4- (2-phenylethynyl)phthalic anhydride forming the end group thereof with one another. A molded body of the cage can be obtained by thermally hardening the powdery asymmetric aromatic polyimide oligomer resin after it is injected into a die. As a commercially available product of the powdery asymmetric aromatic polyimide oligomer resin, PETI-330 produced by Ube Industries, Ltd. is exemplified.

The asymmetric aromatic polyimide oligomer resin is obtained by using 9,9-bis(4-(4-aminophnoxy)phenyl) fluorine or 2-phenyl-4,4'-diaminodiphenyl ether as its diamine component.

As other aromatic polyimide oligomer resin, it is possible to exemplify norbornene-terminated reaction type thermosetting polyimide such as "PMR-15" and "LARK-160" developed by National Aeronautics and Space Administration (NASA) and "THERMID" produced by Hughes Aircraft Company.

As still other aromatic polyimide oligomer resin commercially available, SKYBOND 8000 produced by IST Corp. is exemplified.

The imide resin containing the aromatic imide bond in its molecule also includes a solvent-soluble resin containing the aromatic imide bond in its molecule. As the solvent-soluble resin, polyamide imide resin and the polyimide resin containing polyamic acid in its molecule are exemplified.

The polyamide imide resin contains an imide bond and an amide bond in its molecule and is obtained in the form of powder or in the form of a solution in which the powder of the polyamide imide resin is dissolved in a solvent. As the polyamide imide resin commercially available, Torlon produced by Solvay Advanced Polymers L.L.C. is exemplified. It is preferable to appropriately post-cure the polyamide imide resin. To improve the solubility of the polyimide resin, the polyimide resin is capable of containing the polyamic acid in its molecule.

As the imide resin containing the aromatic imide bond, it is possible to use the aromatic polyamic acid which is a precursor making a dewatering cyclization to form the imide bond. In forming a resin cage through a prepreg, the aromatic polyamic acid can be preferably used.

The aromatic polyamic acid is obtained in a low-temperature reaction between an aromatic dianhydride and the aromatic diamine. As the aromatic dianhydride, pyromellitic dianhydride, 2,2',3,3'-biphenyl-tetracarboxylic acid dianhydride, 3,3',4,4'-biphenyl-tetracarboxylic acid dianhydride, 3,3',4,4'-benzophenontetracarboxylic acid dianhydride, 1,2,5,6-naphthalene tetracarboxylic acid dianhydride, and bis(2,3-dicarboxyphenyl)methanoic dianhydride are listed. These aromatic dianhydrides are used singly or mixedly.

As the aromatic diamine, 4,4'-diaminodiphenyl ether, 3,3'-diaminodiphenyl sulfone, 4,4'-diaminodiphenylmethane, methanephenylenediamine, paraphenylenediamine, and 4,4'-bis(3-aminophenoxy)biphenyl ether are listed. These aromatic diamines are used singly or mixedly.

As commercially available imide resins containing the aromatic polyamic acid, U-varnish-S (produced by Ube Industries, Ltd.), U-varnish-A (produced by Ube Industries, Ltd.), SKYBOND 700 (produced by IST Corp.), SKYBOND 703 (produced by IST Corp.), and SKYBOND 705 (produced by IST Corp.) are listed.

As examples especially preferable, the U-varnish-S and the U-varnish-A containing the 3,3',4,4'-biphenyl-tetracarboxylic acid dianhydride as the acid component thereof are listed.

The thermosetting resin which can be used in the present invention can be combined with a heat-resistant material such as polybenzimidazole resin and a functional polymer such as fluororesin in a range in which the material property of the polyimide resin such as its heat resistance and moldability are not impaired to form polymer alloys.

It is possible to add reinforced short fibers, various kinds of whiskers, nano particles such as carbon nano-fibers which are nano-fillers, and fullerene to the thermosetting resin. To impart self-lubricity to the thermosetting resin, it is also possible to add graphite, molybdenum disulfide, tungsten disulfide or boron nitride to the thermosetting resin singly or plurally.

In the case where the thermosetting resin consisting of the alloy of the polyimide resin and other polymer is used, it is preferable that the entire resin contains not less than 80 mass% of the imide resin. When the mixing amount of the imide resin is less than 80 mass%, the property of the imide resin cannot be obtained. The thermosetting resin is reinforced with the carbon fiber material. The carbon fiber material which can be used in the present invention consists of a bundle of 1000 to 5000 monofilaments, a woven cloth or a unidirectional material consisting of the bundle of the monofilaments. The woven cloth and the unidirectional material are a laminated body of the carbon fiber materials respectively.

It is preferable that thread to be used as the carbon fiber material is carbon fibers produced from polyacrylonitrile (PAN) in consideration of its availability. Carbon fibers produced from petroleum pitch may be used.

The bundle of the carbon fibers to be used in the present invention consists of 1000 to 5000 monofilaments having the diameter of 4 to 10μm. By setting the number of the monofilaments of one bundle and the diameter thereof to the above-described range, the resin is capable of impregnating into the gaps between the monofilaments. Thereby the carbon fiber composite material is allowed to have little defect such as a void. As the fiber, it is possible to use 1K (about 1,000 fibers), 1.5K (about 1, 500 fibers), and 3K (about 3,000 fibers). The fiber 1K or 1.5K is preferable in terms of the qualities thereof and production techniques. But in consideration of the availability of these fibers, the fiber 3K is preferable because the fiber 3K can be easily industrially obtained. In the case where the fiber bundle consisting of not less than 5,000 filaments is used, it is difficult for the resin to impregnate into the gaps between adjacent ones, which may cause the generation of a defect such as a void on the fiber bundle.

The carbon fiber material can be formed into the woven cloth by using the fiber bundle. As the woven cloth, plain weave, twill weave, and sateen weave can be adopted. The weaving method preferable in the present invention is the plain weave. Supposing that the numbers of the carbon fibers of bundles are equal to each other, as the weaving method, it is possible to use any of the plain weave, the twill weave, and the sateen weave in consideration of the mechanical properties thereof. Considering that the fibers of the plain weave are unlikely to become loose, the plain weave is preferable. In the case where RTM molding is adopted, the woven cloth is excellent in the property of following the configuration of a die when the twill weave or the sateen weave is used to preform the woven cloth, but is liable to become loose. Thus it is difficult to fix the woven cloth into a preform. In the case where the prepreg is molded by sheet winding method, there is no restriction in the method of weaving cloth.

Organic polymeric fibers such as aramid, polybenzoxazole or the like can be used for the carbon fiber material in a range in which the use thereof does not cause the strength of the carbon fiber material to deteriorate. It is possible to combine the carbon fiber material with inorganic fibers such as glass fiber, SiC or the like in a range in which the use of the inorganic fibers does not deteriorate the specific strength and specific elastic modulus of the carbon fiber material.

As the volume percent between the thermosetting resin and the carbon fiber material, the carbon fiber material for the entire carbon fiber composite material is 45 to 80 vol%, favorably 45 to 65 vol%, and more favorably 50 to 60 vol%. The volume percent is a value expressed by [(volume of carbon fiber material/volume of carbon fiber composite material) × 100]. When the vol% of the carbon fiber material for the carbon fiber composite material is less than 45, the carbon fiber composite material has a low bending strength or a low elastic modulus. Thus it is impossible to make the most of the specific strength and the specific elastic modulus which are characteristic of the present invention. On the other hand, when the vol% of the carbon fiber material for the entire carbon fiber composite material is more than 80, the mixing amount of the entire resin is small and thus adhesion between fibers is low. Thereby woven cloth layers may peel from each other.

Owing to the above-described composition and mixing ratio among the components thereof, the carbon fiber composite material is capable of having a bending strength of not less than 600 MPa at 25°C and a bending strength retention rate of not less than 50% of an initial value thereof at 200°C. The elastic modulus of the carbon fiber composite material at 25°C is not less than 35 GPa. The elastic modulus retention rate thereof at 200°C is not less than 50% of an initial value thereof.

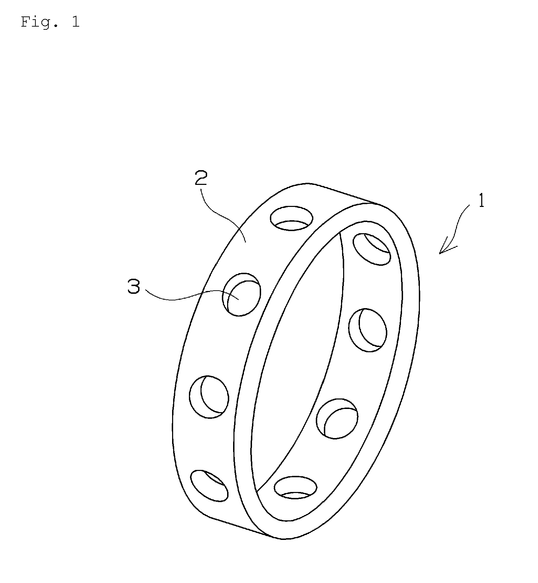

Fig. 1 shows an example of the cage, of the present invention for the rolling bearing, which is formed by using the carbon fiber composite material. Fig. 1 is a perspective view of a cage for a ball bearing. The cage is obtained by molding the carbon fiber composite material into a semi-finished product and thereafter subjecting the semi-finished product to a cutting work.

As shown in Fig. 1, a cage 1 has a plurality of rolling element-retaining pockets 3, for retaining balls serving as rolling elements, which are formed in penetration through an annular cage body 2 at regular intervals. The pocket 3 is a depressed circle in the plane shape of the pocket 3, but may be a perfect circle. The depressed circular shape means a configuration composed of the radius of a pocket surface almost approximate to the radius of each of balls disposed at both sides of a gap amount coincident with the amount of a pocket gap (difference between the inner diameter of the pocket and the diameter of the ball) required in the perfect circle. It is preferable that the pocket 3 has the depressed circular shape capable of decreasing a load applied to the cage by increasing the pocket gap amount in the circumferential direction of the rotating shaft to absorb gain and delay of the ball.

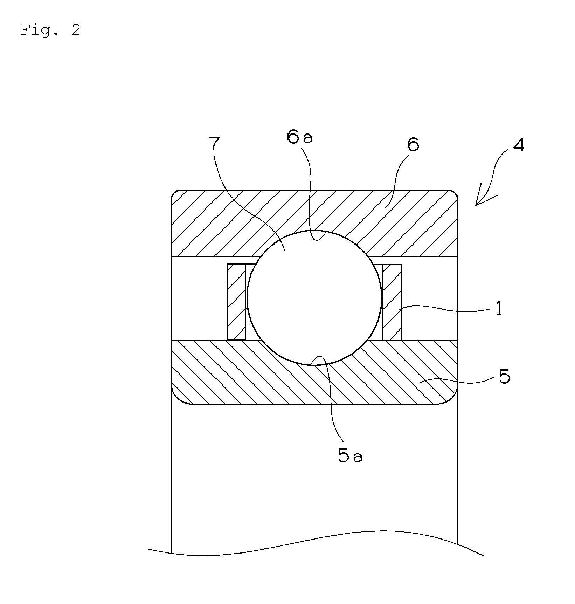

Fig. 2 shows an example of the rolling bearing of the present invention. Fig. 2 is a sectional view of the rolling bearing (deep groove ball bearing) where a cage for the rolling bearing is used. In the rolling bearing 4, an inner ring 5 having a rolling surface 5a on its peripheral surface and an outer ring 6 having a rolling surface 6a on its inner peripheral surface are concentrically disposed. A plurality of rolling elements 7 is disposed between the rolling surface 5a of the inner ring 5 and the rolling surface 6a of the outer ring 6. A cage 1 of the present invention retains a plurality of the rolling elements 7.

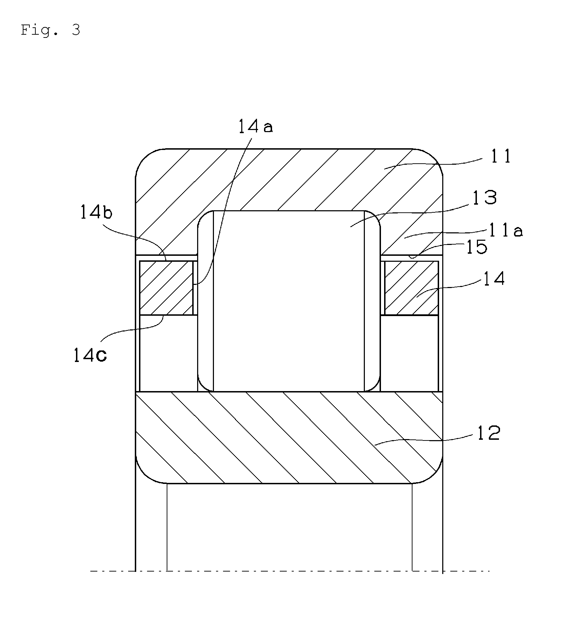

Fig. 3 shows another example of the rolling bearing of the present invention. The rolling bearing is a cylindrical roller bearing in which a cage 14 retains a plurality of rollers 13 between the raceway surface of an outer ring 11 and that of an inner ring 12. An inside diameter surface of a flange 11a of the outer ring 11 which slides on an outside diameter surface of the cage 14 serves as a guide surface 15 for the cage 14 which is a molded body of the carbon fiber composite material reinforced with the woven cloth consisting of the carbon fibers.

In the cage 14, the surface roughness of any one of a surface 14a, an inside diameter surface 14c, and an outside diameter surface 14b of a cage pocket which slides on the roller 13 or that of each of these surfaces is set to not less than 0.8 μmRa nor more than 6.5 μmRa and preferably not less than 1.0 μmRa nor more than 6.5 μmRa. When the surface roughnesses of these surfaces are less than 0.8 μmRa, these surfaces lack the lubricating oil retention performance thereof and thus the friction coefficients thereof will become high. When the surface roughnesses of these surfaces exceed 6.5 μmRa, the rolling elements may be worn.

The surface roughness Ra is defined in JIS B 0601. The reference length is 0.8mm (Ra: 0.2 to 1.0μm) or 2.5mm (Ra: 2 to 10μm). The evaluation length is 4mm (Ra: 0.2 to 1.0μm) and 12.5mm (Ra: 2 to 10μm).

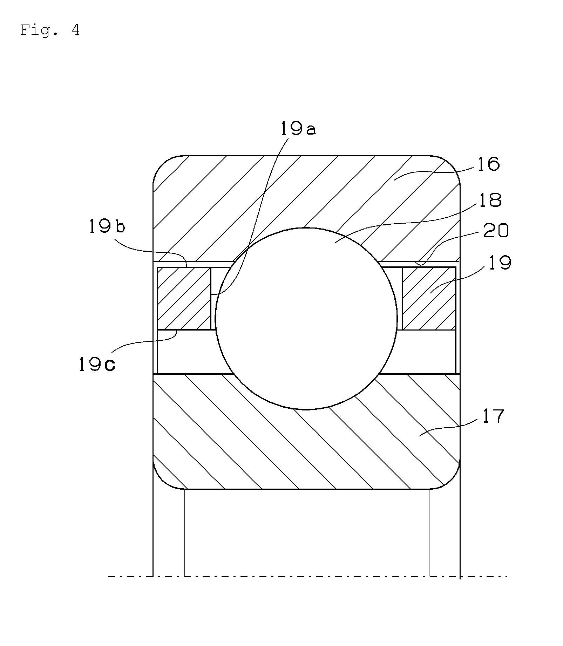

Fig. 4 shows still another example of the rolling bearing of the present invention. The rolling bearing is a ball bearing in which a cage 19 retains a plurality of balls 18 between the raceway surface of an outer ring 16 and that of an inner ring 17. An inside diameter surface of the outer ring 16 which slides on an outside diameter surface of the cage 19 serves as a guide surface 20 for the cage 19 which is a molded body of the carbon fiber composite material reinforced with the woven cloth consisting of the carbon fibers.

In the cage 19, the surface roughness of any one of a surface 19a, an outside diameter surface 19a, and an inside diameter surface 19c of a cage pocket which slides on the balls 18 or that of each of these surfaces is set to not less than 0.8 μmRa nor more than 6.5μmRa. The surface roughnesses of these surfaces are as defined above. Similarly to the cage shown in Fig. 1, the plane configuration of the pocket may be a depressed circular configuration or a perfect circular configuration.

As the method of producing the cage, it is preferable to shape the material into a pipe, cut the pipe to form a ring with a cutter, and drill the ring to form the pockets by using an end mill. As thepipe-shapingmethod, it is possible to use various shaping methods such as the sheet winding (SW) method, a filament winding (FW) method, ahandlay-upmethod, aspraymethod, andanRTMmethod. Itispossible to use L-RTM molding and VaRTM molding which are one kind of the RTM method and are vacuum assisted molding methods.

For example, in the case where the SW method is used, a long cylindrical member is formed by winding a sheet-shaped prepreg composed of reinforced fibers impregnated with a matrix resin around a mandrel in a laminated state. Thereafter the cylindrical member is cut in round slices to produce a short cylindrical (annular) member for the cage. Thereafter apluralityofpocket holes is formed through the annular member along its circumferential direction by machine processing. In this manner, the cage is obtained.

As a machine processing method, it is possible to use machine processing, laser processing, water cut, and the like.

It is possible to adopt any method of layering a plurality of woven clothes composing the cage one upon another. It is possible to exemplify a method of alternately layering a plurality of woven clothes forming different angles [-45°, +45°] with woven clothes [0°, 90°] or a method of layering a UD material [+60°] and a UD material [-60°] on a unidirectional material (UD material)[0°].

Because the cage excellent in its mechanical and thermal properties is used for the rolling bearing of the present invention, the rolling bearing can be used in conditions in which the DN value is not less than 1,500,000 and the operating temperature is not less than 200°C. For example, the rolling bearing can be preferably used for the main shaft of a jet engine mounted on an airplane. The rolling bearing can be also used as a rolling bearing unit for an airplane incorporating the rolling bearing.

The rolling bearing can be preferably used as the cylindrical roller bearing and the ball bearing.

The rolling bearing can be lubricated by packing arbitrary lubricating oil or grease therein. The matrix resin is used for the carbon fiber composite material of the cage, the carbon fiber composite material is inactive and capable of maintaining its excellent lubricating property for a long period of time, even if lubricating oil containing a sulfur-based additive is used for the rolling bearing.


EXAMPLES

The present invention is further described below by way of examples, but the scope thereof is not limited thereby.

[Examples A-1 through A-18 and Comparative Examples A-1 through A-5]

Materials used in the examples and the comparative examples are collectively shown below. The mixing rates of the materials are shown in tables 1, 2, and 3.

(A) High-polymer compound (resin)

(1) PI-1: biphenyl polyimide resin (PETI-330 produced by Ube Industries, Ltd.)
(2) PI-2: polyimide resin (SKYBOND 700 produced by IST Corp.)
(3) PAI: polyamide imide resin (Torlon 4000T produced by Solvay Advanced Polymers L.L.C.)
(4) BMI: bismaleimido resin (BM1-1000 produced by Daiwa Kasei Industry Co., Ltd.)
(5) Epoxy: epoxy resin (101 produced by Toho Tenax Co., Ltd. (as prepreg))
(6) PPS: PPS resin (160N produced by TOSOH CORPORATION)
(7) PEEK: PEEK resin (polyether ether ketone, PEEK 150G produced by Victrex Ltd.)

(B) Carbon fiber material (woven cloth)

(1) 1K: woven cloth (TR1120 (1K, plain weave) produced by Mitsubishi Rayon Co., Ltd.)
(2) 3K: woven cloth (TR3110M (3K, plain weave) produced by Mitsubishi Rayon Co., Ltd.)
(3) 5K: woven cloth (five units of 1K threads superimposed one upon another were plainly woven (unit weight: about 300g/m$^2$)).
(4) 6K: woven cloth (TR6120M (6K, plain weave) produced by Mitsubishi Rayon Co., Ltd.)
(5) Aramid: aramid woven cloth (CT709 (plain weave, unit weight: about 200g/m$^2$) produced by Teijin Limited))
(6) PBO: PBO woven cloth (Zylon (unit weight: about 190g/m$^2$) produced by TOYOBO CO., LTD.))

The molding methods used in the examples and the comparative examples are shown below.

(1) Prepreg A: Method of producing prepreg by using solution

Each resin material was dissolved in an organic solvent such as N-methyl-2-pyrrolidone before the resin material was thermally hardened to form varnish having a solid content of about 20 to 50 mass%. After each varnish was applied to each woven cloth by using a roller, the solvent was volatilized in a vacuum drying oven to form a prepreg of each of the examples and the comparative examples. After a plurality of the prepregs was layered one upon another to such an extent that the thickness of a molded body of the prepregs was 2±0.3mm, the resin material was thermally hardened by a hot pressing method. After the resin material was hardened, the resin material was post-cured for not less than five hours at a temperature lower than its hardening temperature to allow the resin material to have an optimum thermally hardened state. After the specimen of each of the examples and the comparative examples was produced by subjecting the corresponding flat plate to mechanical processing by using a cutter or the like, a bending test (room temperature (25°C) and 200°C) conforming to JIS K7074-1998 was conducted on the specimens.

(2) Prepreg B: Method of producing prepreg by using molten resin

Except that instead of using the varnish, after each woven cloth was impregnated with resin molten at a temperature not less than its melting point, the temperature of each resin material was decreased to a room temperature (25°C) to form the prepreg of each of the examples and the comparative examples, specimens were produced in a method similar to the method of preparing the prepreg A. The specimens were evaluated by using a method similar to the method of preparing the prepreg A.

(3) VaRTM: Preparation of specimens by using VaRTM

After a plurality of woven clothes of each of the examples and the comparative examples was cut to 100mm × 100mm, they were layered one upon another to such an extent that the thickness of a molded body of the prepregs was 2±0.3mm. Thereafter the layered woven clothes of each of the examples and the comparative examples were set in a die having a resin injection gate at its side. After a set of dies was set inside a sealed vacuum chamber, the pressure inside the vacuum tank was decreased by using a rotary pump. Thereafter each resin heated up to a temperature not less than its melting temperature by using a ring heater was injected into the die. After the resin was thermally hardened, the die was cooled to take out each flat plate from the die. After the resin was post-cured in a manner similar to the above-described one, specimens of each of the examples and the comparative examples was prepared bymechanicallyprocessing the corresponding flat plate with a cutter to conduct a bending test (room temperature (25°C) and 200°C) conforming to JIS K7074-1998.

(4) Evaluation method

Specimens which had the bending strength not less than 600 MPa and the bending strength retention rate at 200°C not less than 50% of the bending strength retention rate thereof at a room temperature were evaluated as "○" in the strength retention rate thereof.

Specimens which had the bending elastic modulus not less than 40 GPa and the bending elastic modulus retention rate at 200°C not less than 50% of the bending elastic moduli retention rate thereof at the room temperature were evaluated as "○" in the elastic modulus retention rate thereof.

Specimens evaluated as "○" in both the strength retention rate thereof and the elastic modulus retention rate thereof were marked by "○" in the overall evaluation.

Carbon fiber composite materials each having the composition shown in tables 1 through 3 were produced by using the molding method shown in tables 1 through 3 to obtain specimens of the examples and the comparative examples whose properties were evaluated by the above-described evaluation method. The results are shown in tables 1, 2, and 3.

[Table 1]

| | | Example | | | | | | | |
|---|---|---|---|---|---|---|---|---|---|
| | | A-1 | A-2 | A-3 | A-4 | A-5 | A-6 | A-7 | A-8 |
| Material | | | | | | | | | |
| | Resin | PI-1 | PI-1 | PI-1 | PAI | PI-1 | PI-1 | PI-2 | PI-2 |
| | Number of filaments | 1K | 3K | 5K | 3K | 3K | 3K | 1K | 3K |
| | Glass transition temperature, °C | 343 | 343 | 364 | 275 | 343 | 343 | 364 | 364 |
| | Percentage of fiber (vol%) | 54 | 55 | 55 | 55 | 50 | 59 | 55 | 54 |
| Molding method | | VaRTM | VaRTM | VaRTM | VaRTM | Prepreg | Prepreg | Prepreg | Prepreg |
| Property of molded body | | | | | | | | | |
| Bending strength | | | | | | | | | |
| | Room temperature, MPa | 751 | 686 | 631 | 744 | 740 | 759 | 729 | 690 |
| | 200°C, MPa | 713 | 632 | 540 | 593 | 722 | 734 | 697 | 670 |
| | 200°C, Retention rate(%) | 95 | 92 | 86 | 80 | 98 | 97 | 96 | 97 |
| | Evaluation of strength retention rate | ○ | ○ | ○ | ○ | ○ | ○ | ○ | ○ |
| Bending elastic modulus | | | | | | | | | |
| | Room temperature, MPa | 55 | 53 | 47 | 51 | 49 | 55 | 56 | 53 |
| | 200°C, MPa | 52 | 50 | 44 | 40 | 48 | 53 | 53 | 48 |
| | 200°C, Retention rate(%) | 95 | 94 | 94 | 78 | 98 | 96 | 95 | 91 |
| | Evaluation of elastic modulus retention rate | ○ | ○ | ○ | ○ | ○ | ○ | ○ | ○ |
| Overall evaluation | | ○ | ○ | ○ | ○ | ○ | ○ | ○ | ○ |

[Table 2]

| | | Example | | | | | | | |
|---|---|---|---|---|---|---|---|---|---|
| | | A-9 | A-10 | A-11 | A-12 | A-13 | A-14 | A-15 | A-16 |
| Material | | | | | | | | | |
| | Resin | PI-2 | PI-2 | PI-2 | PI-2 | PAI | BMI | BMI | BMI |
| | Number of filaments | 5K | 3K | 3K | 3K | 3K | 1K | 3K | 5K |
| | Glass transition temperature, °C | 364 | 364 | 364 | 365 | 275 | 265 | 265 | 265 |
| | Percentage of fiber (vol%) | 55 | 40 | 45 | 65 | 55 | 55 | 55 | 55 |
| Molding method | | Prepreg | Prepreg | Prepreg | Prepreg | Prepreg | Prepreg | Prepreg | Prepreg |
| Property of molded body | | | | | | | | | |
| Bending strength | | | | | | | | | |
| | Room temperature, MPa | 632 | 578 | 670 | 590 | 742 | 744 | 673 | 608 |
| | 200°C, MPa | 609 | 550 | 609 | 560 | 605 | 459 | 454 | 430 |
| | 200°C, Retention rate(%) | 96 | 95 | 91 | 95 | 82 | 62 | 67 | 71 |
| Evaluation of strength retention rate | | ○ | ○ | ○ | ○ | ○ | ○ | ○ | ○ |
| Bending elastic modulus | | | | | | | | | |
| | Room temperature, MPa | 53 | 47 | 47 | 48 | 51 | 45 | 47 | 52 |
| | 200°C, MPa | 47 | 44 | 45 | 46 | 39 | 32 | 33 | 34 |
| | 200°C, Retention rate(%) | 89 | 94 | 96 | 96 | 76 | 71 | 70 | 65 |
| Evaluation of elastic modulus retention rate | | ○ | ○ | ○ | ○ | ○ | ○ | ○ | ○ |
| Overall evaluation | | ○ | ○ | ○ | ○ | ○ | ○ | ○ | ○ |

| | Example | | Comparative example | | | | |
|---|---|---|---|---|---|---|---|
| | A-17 | A-18 | A-1 | A-2 | A-3 | A-4 | A-5 |
| Material | | | | | | | |
|   Resin | Epoxy | Epoxy | PI-1 | BMI | BMI | PPS | PEEK |
|   Number of filaments | 1K | 3K | 6K | Aramid | PBO | 3K | 3K |
|   Glass transition temperature, °C | 185 | 185 | 343 | 265 | 265 | 98 | 145 |
|   Percentage of fiber (vol%) | 55 | 55 | 55 | 55 | 55 | 55 | 55 |
| Molding method | Prepreg | Prepreg | VaRTM | Prepreg | Prepreg | VaRTM | VaRTM |
| Property of molded body | | | | | | | |
|   Bending strength | | | | | | | |
|     Room temperature, MPa | 698 | 667 | 400 | 503 | 601 | 650 | 680 |
|     200°C, MPa | 359 | 349 | 368 | 259 | 210 | 273 | 322 |
|     200°C, Retention rate(%) | 51 | 52 | 92 | 51 | 35 | 42 | 47 |
|   Evaluation of strength retention rate | ○ | ○ | × | × | × | × | × |
|   Bending elastic modulus | | | | | | | |
|     Room temperature, MPa | 48 | 50 | 45 | 29 | 31 | 51 | 55 |
|     200°C, MPa | 29 | 28 | 40 | 14 | 11 | 22 | 27 |
|     200°C, Retention rate(%) | 60 | 56 | 89 | 48 | 35 | 43 | 49 |
|   Evaluation of rateelastic modulus retention erate | ○ | ○ | ○ | × | × | × | × |
| Overall evaluation | ○ | ○ | × | × | × | × | × |

The resin injection operation performed in the comparative example A-1 took 2.5 times as long as that performed in the example A-1. Voids were generated on specimens of the comparative examples produced by the VaRTM method, although the time period required to perform the resin injection operation in the example A-1 and that required to perform the resin injection operation in the comparative examples were equal to each other.

To conduct a bearing test, after the cages shown in Fig. 1 of the examples A-1 through A-16 were produced by using the above-described materials, the cages were incorporated in a deep groove ball bearing made of a heat-resistant bearing steel M50. After each cage was mounted on a shaft which rotated in conditions where the DN value was 1,600,000 and the atmospheric temperature was 200°C, turbo oil 2197 produced by BP Corporation was supplied to the deep groove ball bearing from the outside as the lubricating oil. The deep groove ball bearing was operated in the above-described conditions for two hours. The result was that no abnormality was found on the rolling bearing in which the cages of the examples A-1 through A-16 were used.

[Examples B-1 through B-21 and Comparative Examples B-1 through B-3]

Materials used in the examples and the comparative examples are collectively shown below. The mixing rates of the materials are shown in tables 4, 5, and 6.

(A) High-polymer compound (resin)

(1) EP-1: trimethylolpropanetriglycidyl ether resin (Denacol EX-321L produced by Nagase ChemteX Corporation), an acid anhydride hardener (DEGAN produced by Kyowa Hakko Chemical Co., Ltd.), and a hardening accelerator (OR-2E4MZ produced by Shikoku Chemicals Corporation)
(2) PAI: polyamide imide resin (Torlon 4000T-LV produced by Solvay Advanced Polymers L.L.C.)
(3) PI-1: biphenyl polyimide resin (PETI-330 produced by Ube Industries, Ltd.)
(4) EP-2: epoxy resin prepreg (101 produced by Toho Tenax Co., Ltd.)
(5) BMI-1: bismaleimide resin prepreg (301 produced by Toho Tenax Co., Ltd.)
(6) PI-2: biphenyl polyimide resin prepreg (PETI-365 produced by Ube Industries, Ltd.)

(B) Carbon fiber material (woven cloth)

(1) 1K: woven cloth (TR1120 (1K, plain weave) produced by Mitsubishi Rayon Co., Ltd.)
(2) 3K: woven cloth (TR3110M (3K, plain weave) produced by Mitsubishi Rayon Co., Ltd.)
(3) 5K: woven cloth (five units of 1K threads superimposed one upon another were plainly woven (unit weight: about 300g/m$^2$))
(4) 6K: woven cloth (TR6120M (6K, plain weave) produced by Mitsubishi Rayon Co., Ltd.)

The molding methods used in the examples and the comparative examples are shown below.

(1) Circular ring formation by RTM method or VaRTM method and evaluation thereof

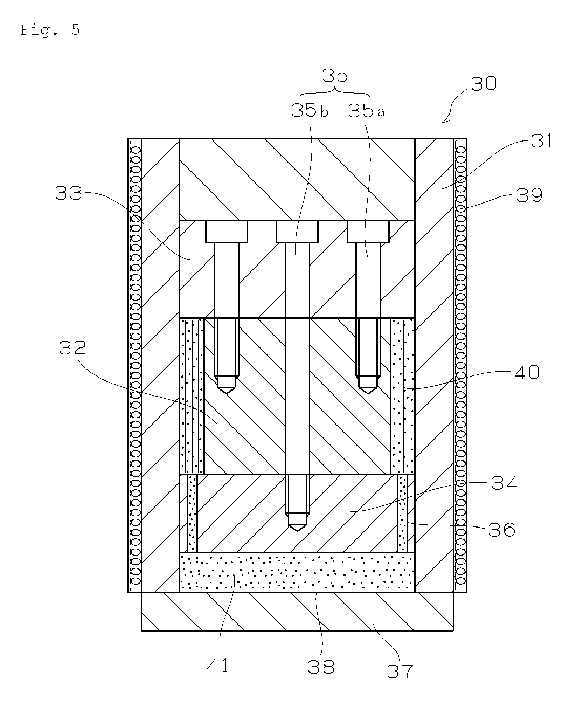

Fig. 5 shows a molding machine used in the RTM method or the VaRTM method. Fig. 5 is a sectional view of the molding machine. Inside a cylinder 31 of the molding machine, a preforming mandrel 32 which has an inner diameter smaller than that of the cylinder 31 is disposed concentrically with the cylinder 31. An upper die 33 disposed at an upper portion of the mandrel 32 and a gate plate 34 disposed at a lower portion thereof were disposed in close contact with the inside diameter of the cylinder 31. The upper die 33 has an ejector pin 35 consisting of an ejector pin 35a thrusting into the preforming mandrel 32 and an ejector pin 35b thrusting into the gate plate 34. A gate 36 is formed along the circumferential edge of the gate plate 34. A resin accommodation part 38 for accommodating the resin to be injected into the gate 36 is formed between a lower surface of the gate plate 34 and an upper surface of an end plate 37. A heater 39 for heating the inside of the cylinder 31 is disposed on the outer circumference of the cylinder 31.
By using the molding machine shown in Fig. 5, after a woven cloth 40 of each of the examples was wound in a thickness of 10mm around the preforming mandrel 32 having φ 50mm, the woven cloth 40 was fixed to the preforming mandrel 32 with a film or a seal tape consisting of polytetrafluoroethylene. The RTM method was carried out at a normal pressure, whereas in the VaRTM method, after a set of the molding machine was set in a vacuum chamber, the vacuum chamber was vacuumed by using a rotary pump. After the upper die 33 was pressed from above by a hydraulic cylinder, a resin 41 of each example was poured into the resin accommodation part 38 from an end surface of the preforming mandrel 32 through the gate 36. After the resin 41 was left in the resin accommodation part 38 for a certain period of time, the temperature of the molding machine was increased to thermally harden it. After the temperature of the molding machine was decreased and the molded resin was taken out of the die, the resin was cut by using a cutter or the like to check the situation of wrinkles formed on the outer circumferential portion thereof. Resins where wrinkles were formed were marked by "×", whereas resins which did not wrinkle and could be molded into circular rings were marked by ○.

(2) Molding of prepreg into circular ring by sheet winding method

After each prepreg was cut to 100mm in the width thereof, the prepreg was wound in a thickness of 10mm around a mandrel having φ 50mm. Thereafter a seal tape consisting of polytetrafluoroethylene was wound around the prepreg from the outside-diameter side thereof to apply a molding pressure thereto. The mandrel around which the prepreg was wound was left in a constant-temperature bath kept at a certain temperature to thermally harden the prepreg. After the prepreg hardened, each of the obtained circular rings was cut by the cutter or the like to check the situation of wrinkles formed on the outer circumferential portion thereof. Circular rings where wrinkles were formed were marked by "×", whereas circular rings which did not have defects were marked by ○.

(3) Preparation of specimens

After a plurality of woven clothes of each of the examples and the comparative examples were cut to 100mm × 100mm, they were layered one upon another to such an extent that the thickness of a molded body of the prepregs was 2±0.3mm. Thereafter a set of dies was set inside a sealed vacuum tank. While the air inside the vacuum tank was being discharged by using the rotary pump, each resin heated (normal pressure in the case of RTM molding) up to a temperature not less than its melting temperature by using the ring heater was injected into the die to perform compressional heating. After the die was cooled, the resin was taken out of the die. After the resin was post-cured, specimens were prepared by mechanically processing the cured resin with a cutter or the like to conduct a bending test (room temperature (25°C) and 200°C) conforming to JISK7074-1998.

(4) Evaluation method

(4-1) Computation of void percentage

The densities of the specimens formed by the above-described circular ring molding methods (1) and (2) were measured by using an Archimedes method. The void percentage of each specimen was computed in accordance with JISK7053 from an equation 1 shown below.

$$\text{Void percentage} = 100 \times (\text{Theoretical density of specimen} -$$

$$\text{Actual density of specimen})/ (\text{Theoretical density of specimen})$$

$$\cdots (\text{Equation 1})$$

The theoretical density of the specimen was computed from an equation 2 shown below.

$$\text{The theoretical density of specimen} = 100 \div [(\text{Weight of fiber}$$

$$\div \text{Density of fiber}) + (\text{Weight of resin} \div \text{Density of resin})] \cdots$$

$$(\text{Equation 2})$$

(4-2) Mechanical strength

Specimens, obtained by carrying out the above-described method (3), which had the bending strength not less than 600 MPa and the bending strength retention rate at 200°C not less than 50% of the bending strength retention rate thereof at the room temperature were evaluated as "◎" in the strength retention rate thereof. Specimens which had the bending strength not less than 400 MPa and less than 600 MPa were evaluated as "○" in the strength retention rate thereof.
Specimens which had the bending elastic modulus not less than 40 GPa and the bending elastic modulus retention rate at 200°C not less than 50% of the bending elastic moduli retention rate thereof at the room temperature were evaluated as "◎" in the elastic modulus retention rate thereof. Specimens which had the bending elastic modulus not less than 35 GPa and less than 40 GPa were evaluated as "○" in the elastic modulus retention rate thereof.
Specimens marked by "◎" or "○" in the evaluation of the items of the circular ring molding and the mechanical strength were marked by "○" in the overall evaluation.
Carbon fiber composite materials each having the composition shown in tables 1 through 3 were produced by using the molding method shown in tables 1 through 3 to obtain specimens of the examples and the comparative examples whose properties were evaluated by the above-described evaluation method. To evaluate the properties of the molded articles, the specimens prepared by using the above-described method of (3) were used. The results are shown in tables 4, 5, and 6.

[Table 4]

| | | Example | | | | | | | |
| --- | --- | --- | --- | --- | --- | --- | --- | --- | --- |
| | | B-1 | B-2 | B-3 | B-4 | B-5 | B-6 | B-7 | B-8 |
| Material | | | | | | | | | |
| | Resin | EP-1 | EP-1 | EP-1 | EP-1 | PI-1 | PI-1 | PI-1 | PI-1 |
| | Number of filaments | 1K | 3K | 5K | 6K | 1K | 3K | 5K | 6K |
| | Method of weaving cloth | Plain weave | Plain weave | Plain weave | Plain weave | Plain weave | Plain weave | Plain weave | Plain weave |
| | Glass transition temperature, °C | 183 | 183 | 183 | 183 | 343 | 343 | 343 | 343 |
| Molding method | | RTM | RTM | RTM | RTM | RTM | RTM | RTM | RTM |
| Molding of circular ring | | ○ | ○ | ○ | ○ | ○ | ○ | ○ | ○ |
| Percentage of void (%) | | 1.5 | 2.0 | 2.5 | 3.9 | 1.2 | 1.9 | 2.3 | 3.4 |
| Property of molded body | | | | | | | | | |
| Bending strength | | | | | | | | | |
| | Room temperature, MPa | 742 | 678 | 631 | 588 | 759 | 740 | 703 | 593 |
| | 200°C, MPa | 346 | 332 | 288 | 210 | 741 | 709 | 687 | 574 |
| | 200°C, Retention rate(%) | 47 | 49 | 46 | 36 | 98 | 96 | 98 | 97 |
| | Evaluation of strength | ○ | ○ | ○ | ○ | ◎ | ◎ | ◎ | ○ |
| Bending elastic modulus | | | | | | | | | |
| | Room temperature, MPa | 55 | 53 | 47 | 38 | 55 | 53 | 47 | 39 |
| | 200°C, MPa | 25 | 24 | 22 | 18 | 51 | 49 | 46 | 38 |
| | 200°C, Retention rate(%) | 45 | 45 | 47 | 47 | 93 | 92 | 98 | 97 |
| | Evaluation of elastic modulus | ○ | ○ | ○ | ○ | ◎ | ◎ | ◎ | ○ |
| Overall evaluation | | ○ | ○ | ○ | ○ | ○ | ○ | ○ | ○ |

| | | Example | | | | | | | |
|---|---|---|---|---|---|---|---|---|---|
| | | B-9 | B-10 | B-11 | B-12 | B-13 | B-14 | B-15 | B-16 |
| Material | Resin | PI-1 | PAI | PAI | PAI | PAI | PI-1 | PI-1 | PI-1 |
| | Number of filaments | 3K | 1K | 3K | 5K | 6K | 1K | 3K | 5K |
| | Method of weaving cloth | Twill weave | Plain weave | Plain weave | Plain weave | Plain weave | Plain weave | Plain weave | Plain weave |
| | Glass transition temperature, °C | 343 | 275 | 275 | 275 | 275 | 343 | 343 | 343 |
| Molding method | | RTM | RTM | RTM | RTM | RTM | VaRTM | VaRTM | VaRTM |
| Molding of circular ring | | ○ | ○ | ○ | ○ | ○ | ○ | ○ | ○ |
| Percentage of void (%) | | 2.2 | 2.1 | 2.5 | 2.8 | 3.4 | 0.6 | 0.8 | 2.1 |
| Property of molded body | Bending strength | | | | | | | | |
| | Room temperature, MPa | 734 | 640 | 631 | 602 | 593 | 751 | 678 | 631 |
| | 200°C, MPa | 710 | 553 | 550 | 507 | 574 | 713 | 632 | 587 |
| | 200°C, Retention rate(%) | 97 | 86 | 87 | 84 | 97 | 95 | 93 | 93 |
| | Evaluation of strength | ◎ | ◎ | ◎ | ◎ | ○ | ◎ | ◎ | ◎ |
| | Bending elastic modulus | | | | | | | | |
| | Room temperature, MPa | 53 | 55 | 53 | 47 | 39 | 55 | 53 | 47 |
| | 200°C, MPa | 50 | 38 | 32 | 30 | 28 | 52 | 50 | 44 |
| | 200°C, Retention rate(%) | 94 | 69 | 60 | 64 | 72 | 95 | 94 | 94 |
| | Evaluation of elastic modulus | ◎ | ◎ | ◎ | ◎ | ○ | ◎ | ◎ | ◎ |
| Overall evaluation | | ○ | ○ | ○ | ○ | ○ | ○ | ○ | ○ |

(continued)

| | | Example | | | | | Comparative example | | |
|---|---|---|---|---|---|---|---|---|---|
| | | B-17 | B-18 | B-19 | B-20 | B-21 | B-1 | B-2 | B-3 |
| Material | | | | | | | | | |
| | Resin | PI-1 | PAI | PAI | PAI | PAI | EP-2 | BMI-1 | PI-2 |
| | Number of filaments | 6K | 1K | 3K | 5K | 6K | 3K | 3K | 3K |
| | Method of weaving cloth | Plain weave | Plain weave | Plain weave | Plain weave | Plain weave | Plain weave | Plain weave | Plain weave |
| | Glass transition temperature, °C | 343 | 275 | 275 | 343 | 343 | 185 | 267 | 343 |
| Molding method | | VaRTM | VaRTM | VaRTM | VaRTM | VaRTM | Prepreg | Prepreg | Prepreg |
| Molding of circular ring | | ○ | ○ | ○ | ○ | ○ | × | × | × |
| Percentage of void (%) | | 3.9 | 1.5 | 1.8 | 2.2 | 4.1 | 0.8 | 1.8 | 2.1 |
| Property of molded body | | | | | | | | | |
| Bending strength | | | | | | | | | |
| | Room temperature, MPa | 588 | 674 | 627 | 620 | 581 | 710 | 673 | 740 |
| | 200°C, MPa | 546 | 553 | 550 | 507 | 574 | 343 | 454 | 722 |
| | 200°C, Retention rate(%) | 93 | 82 | 88 | 82 | 99 | 48 | 67 | 98 |
| Evaluation of strength | | ○ | ◎ | ◎ | ◎ | ○ | ○ | ○ | ○ |
| Bending elastic modulus | | | | | | | | | |
| | Room temperature, MPa | 38 | 55 | 53 | 47 | 39 | 54 | 47 | 49 |
| | 200°C, MPa | 36 | 37 | 33 | 31 | 27 | 25 | 33 | 48 |
| | 200°C, Retention rate(%) | 95 | 67 | 62 | 66 | 69 | 46 | 70 | 98 |
| Evaluation of elastic modulus | | ○ | ◎ | ◎ | ◎ | ○ | ○ | ○ | ○ |
| Overall evaluation | | ○ | ○ | ○ | ○ | ○ | × | × | × |

EP 2 623 802 A1

To conduct a bearing test, after each of the cages, shown in Fig. 1, made of the above-described materials was incorporated in the deep groove ball bearing made of the heat-resistant bearing steel M50, the cage was mounted on a shaft which rotated in the conditions where the DN value was 1,600,000 and the atmospheric temperature was 200°C with turbo oil 2197 produced by BP Corporation being supplied to the deep groove ball bearing from the outside as the lubricating oil. The deep groove ball bearing was operated for two hours. The result was that no abnormality was found on the rolling bearings in which the cages of the examples B-5 through B-21 were used.

[Examples C-1 through C-17 and Comparative Examples C-1 through C-13]

Materials used in the examples and the comparative examples are collectively shown below. The mixing rates of the materials are shown in tables 7 through 10.

(A) Matrix resin and prepreg

   (1) PI-A: biphenyl polyamic acid varnish (U-varnish-S produced by Ube Industries, Ltd.)
   (2) PI-B: polyamic acid varnish (SKYBOND 700 produced by IST Corp.)
   (3) BMI: bismaleimide resin (BMI-1000 produced by Daiwa Kasei Industry Co., Ltd.)
   (4) EP: the trimethylolpropane triglycidyl ether resin (Denacol EX-321L produced by Nagase ChemteX Corporation), the acid anhydride hardener (DEGAN produced by Kyowa Hakko Chemical Co., Ltd., and the hardening accelerator (0R-2E4MZ produced by Shikoku Chemicals Corporation)

(B) Carbon fiber material (woven cloth)

   (1) Plain weave: woven cloth (TR3110M (3K, plain weave) produced by Mitsubishi Rayon Co., Ltd.)
   (2) UD: unidirectional material (TR30S 3L produced by Mitsubishi Rayon Co., Ltd.)

After each of the matrix resins shown in tables 7, 8, and 10 was weighed at the rate shown in each of the above-described tables, the matrix resin was applied to the woven clothes consisting of the carbon fibers or the unidirectional materials with a brush. Thereafter the matrix resin was uniformly extended thereon with a roller. Thereafter the woven clothes or the unidirectional materials were left for 10 minutes inside a constant-temperature bath preheated to 100°C to volatilize a solvent. In this manner, the prepreg of each of the examples and the comparative examples were produced. Each of the prepregs was cut to 100mm square. After 10 to 40 cut pieces of each prepreg were superimposed one upon another, the cut pieces of each prepreg were set in a die. After the cut pieces of each prepreg were compression-molded at 200 to 250°C, the matrix resin was thermally hardened at 350 to 380°C to produce a flat plate having the width of 45mm, the length of 45mm, and the thickness of 2 to 8mm. After the surface of the flat plate was rubbed with sandpaper (#240~#800) to remove a skin layer therefrom, the surface roughness was adjusted. In this manner, the properties of the obtained specimens were examined by using a Savant-type friction and wear testing machine. The specimens were subjected to an evaluation test described below.

In tables 7, 8, and 10, "section of fiber" indicates the surface of the pocket of the cage, and "Fibrous surface" indicates the inside diameter surface or outside diameter surface of the cage. The cages of the comparative examples C-1 through C-6 were made of metallic materials. As the metallic material, nickel chrome molybdenum steel (SAE4340) was used. The nickel chrome molybdenum steel was not silver-plated in the comparative examples C-1 through C-3, whereas the nickel chrome molybdenum steel was silver-plated in the comparative examples C-4 through C-6.

<Dry run test>

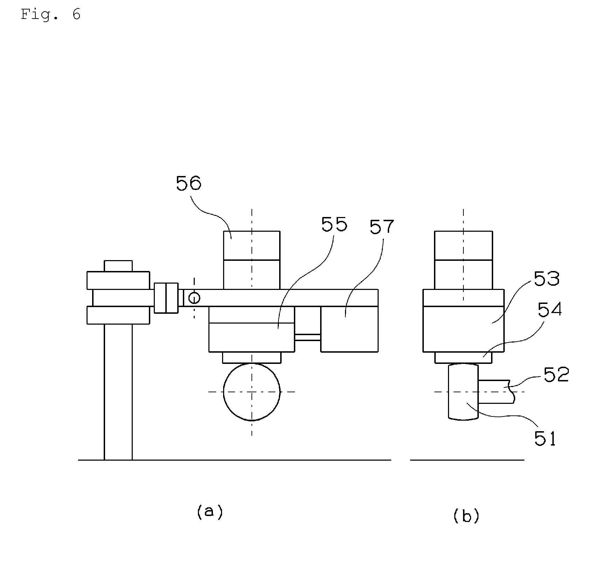

A friction test was conducted on the flat specimens obtained in the above-described manner. Fig. 6 shows a friction testing machine. Fig. 6 (a) shows a front view of the testing machine. Fig. 6(b) shows a side view of the testing machine.

Amating member 51 consisting of SUJ2 was mounted on a rotational shaft 52. A steel plate 54 was fixed to an air slider 55 of an arm part 53. The mating member 51 was rotated in contact with each of the flat specimens while a predetermined load 56 was being applied thereto from above. A load cell 57 detects a frictional force generated when the mating member 51 was rotated.

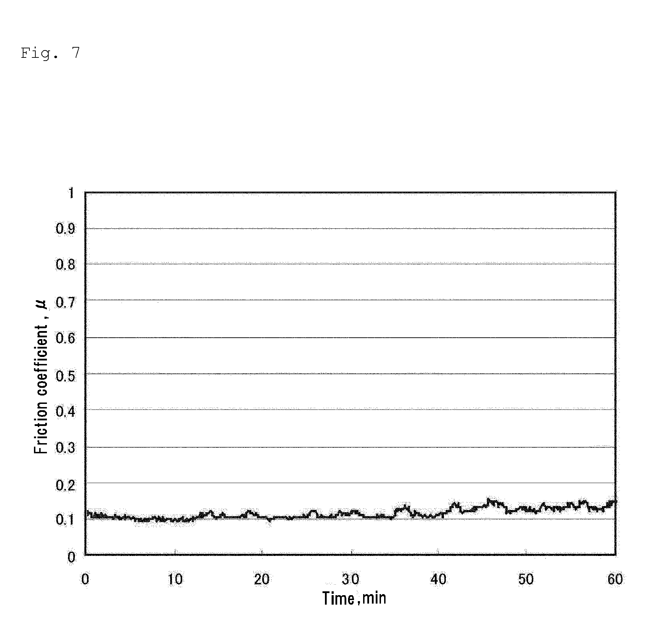

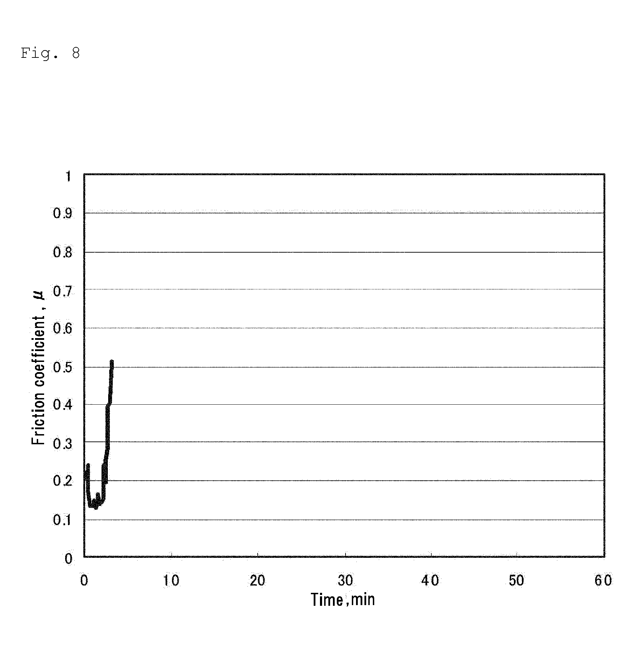

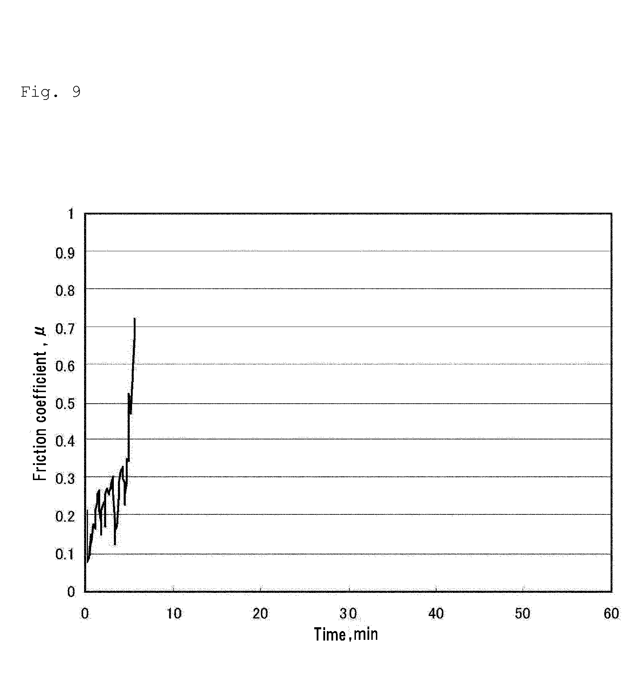

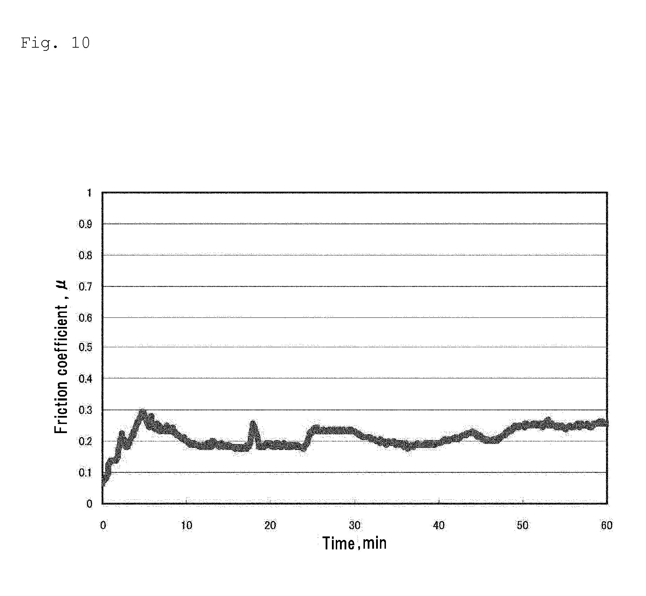

After 1μl of lubricating oil (turbo oil 2380 produced by BP Corporation) conforming to MIL-PRF-23699 was measured by a microsyringe, the lubricating oil was applied to the mating member 51. In this state, a friction test was conducted in conditions in which the load was 50N and the sliding speed was 0.5m/second. An operation period of time until before the friction coefficient of each specimen increased was evaluated as the durability thereof in a dry run state. The upper limit test period of time was set to 60 minutes. The period of time until before the friction coefficient of each specimen exceeded 0.5 or until before the friction coefficient thereof became equal to that at the time when the lubricating oil was not supplied to the mating member 51. Figs. 7, 8, 9, and 10 show the change of each of the friction coefficients of the specimens of the example C-1, the comparative example C-1, the comparative example C-3, and the comparative example C-10 with time respectively.

The dry run performance of each specimen is shown in the tables as the rise period of time of the friction coefficient thereof. Specimens which required not less than 60 minutes in the rise time periods of the friction coefficients thereof were investigated in the aggressiveness on the mating member. The section curve of the mating member was measured by a surface roughness measuring instrument. The depth of wear of each specimen is shown in the tables as the wear amount of the mating member.

<Thermal deterioration test>

Each flat specimen was left in an atmosphere of 300°C. After the lapse of 500 hours, the bending strength retention rate thereof at a room temperature was determined. The method of evaluating the bending strength of the specimen conformed to JIS K7074 (1988). Specimens which had the retention rate not less than 50% were evaluated as "○" in the heat resistance thereof and shown in the tables.

<Overall evaluation>

Specimens shown by "○" in the tables required a long time until before the friction coefficient thereof increased, were low in the aggressiveness on the mating member, and were excellent in the resistance thereof to thermal deterioration in the matrix resin thereof.

[Table 7]

| | Example | | | | | | | | |
|---|---|---|---|---|---|---|---|---|---|
| | C-1 | C-2 | C-3 | C-4 | C-5 | C-6 | C-7 | C-8 | C-9 |
| Material resin | PI-A | PI-A | PI-A | PI-A | PI-A | PI-A | PI-A | PI-A | PI-A |
| Content of resin (vol%) | 25 | 25 | 25 | 25 | 25 | 40 | 50 | 25 | 25 |
| Kind of woven cloth | Plain weave | Plain weave | Plain weave | Plain weave | Plain weave | Plain weave | Plain weave | UD | UD |
| Surface roughness-measured points | Section of fiber | Section of fiber | Section of fiber | Fibrous surface | Fibrous surface | Section of fiber | Section of fiber | Section of fiber | Fibrous surface |
| Glass transition temperature, °C | 345 | 345 | 345 | 345 | 345 | 345 | 345 | 345 | 345 |
| Property of molded article | | | | | | | | | |
|   Surface roughness ($\mu$mRa) | 3.4 | 1.7 | 6.0 | 0.9 | 4.4 | 3.8 | 3.9 | 3.1 | 3.5 |
|   Time period until before friction coefficient increased (minute) | Not less than 60 | 54 | Not less than 60 | Not less than 60 | Not less than 60 | Not less than 60 | Not less than 60 | Not less than 60 | Not less than 60 |
|   wear amount of mating member ($\mu$m) | 0 | - | 0.2 | 0 | 0.1 | 0.2 | 0.2 | 0 | 0.1 |
|   Thermal deterioration test | ○ | ○ | ○ | ○ | ○ | ○ | ○ | ○ | ○ |
| Overall evaluation | ○ | ○ | ○ | ○ | ○ | ○ | ○ | ○ | ○ |

| | Example | | | | | | | |
|---|---|---|---|---|---|---|---|---|
| | C-10 | C-11 | C-12 | C-13 | C-14 | C-15 | C-16 | C-17 |
| Material resin | PI-B | PI-B | PI-B | PI-B | BMI | BMI | BMI | BMI |
| Content of resin (vol%) | 25 | 25 | 25 | 25 | 30 | 30 | 30 | 30 |
| Kind of woven cloth | Plain weave | Plain weave | UD | UD | Plain weave | Plain weave | UD | UD |
| Surface roughness-measured points | Section of fiber | Fibrous surface | Section of fiber | Fibrous surface | Section of fiber | Fibrous surface | Section of fiber | Fibrous surface |
| Glass transition temperature, °C | 355 | 355 | 355 | 355 | 278 | 278 | 278 | 278 |
| Property of molded article | | | | | | | | |
|    Surface roughness ($\mu$mRa) | 3.2 | 3.5 | 3.0 | 3.5 | 3.2 | 3.0 | 2.9 | 3.5 |
|    Time period until before friction coefficient increased (minute) | Not less than 60 | Not less than 60 | Not less than 60 | Not less than 60 | Not less than 60 | Not less than 60 | Not less than 60 | Not less than 60 |
|    wear amount of mating member ($\mu$m) | 0 | 0.1 | 0 | 0 | 0 | 0 | 0 | 0.1 |
|    Thermal deterioration test | ○ | ○ | ○ | ○ | ○ | ○ | ○ | ○ |
| Overall evaluation | ○ | ○ | ○ | ○ | ○ | ○ | ○ | ○ |

| | Comparative example | | | | | |
|---|---|---|---|---|---|---|
| | C-1 | C-2 | C-3 | C-4 | C-5 | C-6 |
| Base material | SAE4340 | SAE4340 | SAE4340 | SAE4340 | SAE4340 | SAE4340 |
| Coating | - | - | - | Silver-plated (40$\mu$m) | Silver-plated (40$\mu$m) | Silver-plated (40$\mu$m) |
| Properties | | | | | | |
|    Surface roughness ($\mu$mRa) | 0.25 | 1.4 | 6.0 | 0.22 | 1.3 | 5.1 |
|    Time period until before friction coefficient increased (minute) | 2 | 10 | 14 | 5 | 16 | 15 |

(continued)

| | | Comparative example | | | | | |
|---|---|---|---|---|---|---|---|
| | | C-1 | C-2 | C-3 | C-4 | C-5 | C-6 |
| wear amount of mating member ($\mu$m) | | - | - | - | - | - | - |
| Overall evaluation | | × | × | × | × | × | × |

| | | Comparative example | | | | | |
|---|---|---|---|---|---|---|---|
| | | C-7 | C-8 | C-9 | C-10 | C-11 | C-12 | C-13 |
| Material resin | | PI-A | PI-A | PI-A | PI-A | PI-A | EP | EP |
| Content of resin (vol%) | | 25 | 25 | 25 | 25 | 25 | 25 | 25 |
| Kind of woven cloth | | Plain weave | Plain weave | Plain weave | UD | UD | Plain weave | Plain weave |
| Surface roughness-measured points | | Section of fiber | Section of fiber | Fibrous surface | Section of fiber | Fibrous surface | Section of fiber | Fibrous surface |
| Glass transition temperature, °C | | 345 | 345 | 345 | 345 | 345 | 124 | 124 |
| Property of molded article | Surface roughness ($\mu$mRa) | 0.25 | 8.4 | 0.21 | 0.27 | 0.19 | 3.3 | 3.1 |
| | Time period until before friction coefficient increased (minute) | 5 | Not less than 60 | 4 | 7 | 5 | Not less than 60 | Not less than 60 |
| | wear amount of mating member ($\mu$m) | - | 12 | - | - | - | - | - |
| | Thermal deterioration test | ○ | ○ | ○ | ○ | ○ | × | × |
| Overall evaluation | | × | × | × | × | × | × | × |

As shown in tables 7 through 10, the metallic cages silver-plated (comparative examples C-4 through C-6) were low in the wear resistance thereof in the dry run test conducted in the above-described condition. The silver-plated layers of the cages wore down to the base material in the early stage of the sliding operation. Thus the friction coefficients thereof started to increase. On the other hand, the carbon fiber composite materials of the examples C-1 through C-17 retained the lubricating oil at valley portions thereof each having an appropriate roughness because the carbon fiber functioned as a load point. Thus the specimens of the examples C-1 through C-17 had an excellent performance in the dry run state. It was found that when the surface roughnesses of the specimens were not less than 0.8 $\mu$mRa, it took a long time until before the friction coefficients thereof increased. From the above, it is effective for allowing the specimen to have an excellent performance in the dry run state that the surface roughnesses thereof is in the above-described range.

It was found that the specimen of the comparative example C-8 whose surface roughness was 8.4 $\mu$mRa larger than 6.5 $\mu$mRa had an aggressiveness (aggressive wear) of the carbon fiber on the mating material.

To conduct a bearing test, after each of the cages made of the carbon fiber composite materials of the examples was incorporated in the deep groove ball bearing made of the heat-resistant bearing steel M50, the cage was mounted on a shaft which rotated in the conditions where the DN value was 1,600,000 and the atmospheric temperature was 200°C with turbo oil 2197 produced by BP Corporation being supplied to the deep groove ball bearing from the outside as the lubricating oil. The deep groove ball bearing was operated for two hours. The result was that no abnormality was found on the rolling bearings in which the cages of the examples were used.

INDUSTRIAL APPLICABILITY

Because the cage of the present invention for the rolling bearing is excellent in being operated at a high speed and a high temperature, the cage can be utilized for the rolling bearing which is used by rotating it at a high speed to support the main shafts, of the jet engine of an airplane and a gas turbine, which are rotated at a high speed. The cage can be also utilized for the rolling bearing which is required to have an excellent performance in the dry run state. Because the above-described specific polyimide resin is used as the matrix resin of the carbon fiber composite material, the cage can be also utilized because the cage is capable of withstanding the soak back caused by the heat of an engine.

EXPLANATION OF REFERENCE NUMERALS AND SYMBOLS

0084

1: cage
2: cage body
3: rolling element-retaining pocket
4: rolling bearing
5: inner ring
6: outer ring
7: rolling element
11: outer ring
12: inner ring
13: roller
14: cage
15: cage guide surface
16: outer ring
17: inner ring
18: ball
19: cage
20: cage guide surface
30: molding machine
31: cylindrical cylinder
32: preforming mandrel
33: upper die
34: gate plate
35: ejector pin
36: gate
37: end plate
38: resin accommodation part
39: heater
40: woven cloth
41: resin
51: mating material
52: rotating shaft
53: arm part
54: steel plate
55: air slider
56: load
57: load cell

**Claims**

1. A cage for a rolling bearing, which is formed by molding a carbon fiber composite material composed of a matrix consisting of a high-polymer compound reinforced with a carbon fiber material ,
   wherein said carbon fiber material consists of a bundle of 1000 to 5000 monofilaments, a woven cloth or a unidirectional material consisting of said bundle of said monofilaments; and
   said high-polymer compound is a thermosetting resin.

2. A cage for a rolling bearing according to claim 1, wherein a glass transition temperature of said thermosetting resin is not less than 200°C after said thermosetting resin thermally hardens.

3. A cage for a rolling bearing according to claim 1, wherein said thermosetting resin is imide resin which contains an aromatic imide bond in a molecule thereof.

4. A cage for a rolling bearing according to claim 3, wherein said imide resin is an addition-type imide resin.

5. A cage for a rolling bearing according to claim 4, wherein said addition-type imide resin is bismaleimide resin.

6. A cage for a rolling bearing according to claim 3, wherein said imide resin is aromatic polyimide oligomer resin.

7. A cage for a rolling bearing according to claim 6, wherein said aromatic polyimide oligomer resin has asymmetric imide structure which becomes non-flat plate in each aromatic ring plates to be delivered from a three-dimensional structure thereof in which a molecular chain is bent and twisted.

8. A cage for a rolling bearing according to claim 7, wherein said asymmetric polyimide oligomer resin is contains a biphenyl-tetracarboxylic acid anhydride as an acid anhydride component thereof.

9. A cage for a rolling bearing according to claim 3, wherein said imide resin is a solvent-soluble resin containing an aromatic imide bond in a molecule thereof.

10. A cage for a rolling bearing according to claim 9, wherein said solvent-soluble resin is polyamide imide resin or polyimide resin containing polyamic acid in a molecule thereof.

11. A cage for a rolling bearing according to claim 1, wherein said thermosetting resin contains not less than 80 mass% of imide resin containing an aromatic imide bond in a molecule thereof.

12. A cage for a rolling bearing according to claim 1, wherein said thermosetting resin is epoxy resin to be cured an epoxy ring-containing resin component with an acid anhydride component.

13. A cage for a rolling bearing according to claim 1, wherein a fiber diameter of said monofilament is 4 to 10$\mu$m.

14. A cage for a rolling bearing according to claim 1, wherein said woven cloth is produced by plain weave.

15. A cage for a rolling bearing according to claim 1, wherein 45 vol% to 80 vol% of said carbon fiber material is contained for an entirety of said carbon fiber composite material.

16. A cage for a rolling bearing according to claim 15, wherein a bending strength of said carbon fiber composite material at 25°C is set to not less than 600 MPa; and a bending strength retention rate thereof at 200°C is set to not less than 50% of a value of said bending strength value thereof at 25°C.

17. A cage for a rolling bearing according to claim 15, wherein an elastic modulus of said carbon fiber composite material at 25°C is set to not less than 35 GPa, and an elastic modulus retention rate thereof at 200°C is set to not less than 50% of a value of said elastic modulus thereof at 25°C.

18. A cage for a rolling bearing according to claim 1, which is formed by molding said carbon fiber composite material by using a resin transfer molding method.

19. A rolling bearing comprising an inner ring, an outer ring, a plurality of rolling elements interposed between said inner ring and said outer ring, and a cage retaining said rolling elements,
wherein said cage is a cage for a rolling bearing as claimed in claim 1.

20. A rolling bearing according to claim 19, which is used in conditions in which a DN value is not less than 1,500,000 and an operating temperature is not less than 200°C.

21. A rolling bearing according to claim 19, which is used for a main shaft of a jet engine mounted on an airplane.

22. A rolling bearing according to claim 19, which is a cylindrical roller bearing or a ball bearing.

23. A rolling bearing according to claim 19, wherein a surface roughness of a pocket of said cage which slides on said rolling elements is set to not less than 0.8 $\mu$mRa nor more than 6.5 $\mu$mRa.

24. A rolling bearing according to claim 19, wherein a surface roughness of at least one surface selected from among an inside and outside diameter surfaces of said cage is set to not less than 0.8 $\mu$mRa nor more than 6.5 $\mu$mRa.

Fig. 1

Fig. 2

Fig. 3

Fig. 4

Fig. 5

Fig. 6

(a)                    (b)

Fig. 7

Fig. 8

Fig. 9

Fig. 10

<table>
<tr><td colspan="2" align="center">**INTERNATIONAL SEARCH REPORT**</td><td>International application No.</td></tr>
<tr><td colspan="2"></td><td>PCT/JP2011/072155</td></tr>
</table>

**A. CLASSIFICATION OF SUBJECT MATTER**
*F16C33/44*(2006.01)i, *C08G73/10*(2006.01)i, *C08J5/04*(2006.01)i, *F16C19/06*
(2006.01)i, *F16C19/26*(2006.01)i, *F16C33/56*(2006.01)i

According to International Patent Classification (IPC) or to both national classification and IPC

**B. FIELDS SEARCHED**

Minimum documentation searched (classification system followed by classification symbols)
F16C33/44, C08G73/10, C08J5/04, F16C19/06, F16C19/26, F16C33/56

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 05-209625 A (NTN Corp.), 20 August 1993 (20.08.1993), paragraphs [0005], [0015] to [0017], [0031]; fig. 1 (Family: none) | 1,2 |
| A | JP 2010-001971 A (NSK Ltd.), 07 January 2010 (07.01.2010), paragraphs [0011] to [0045]; fig. 1, 2 (Family: none) | 1,2 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 December, 2011 (06.12.11) | 13 December, 2011 (13.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| INTERNATIONAL SEARCH REPORT | International application No. |
|---|---|
| | PCT/JP2011/072155 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
   See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1 and 2

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2011/072155 |

<u>Continuation of Box No.III of continuation of first sheet(2)</u>

Document 1 (JP 05-209625 A (NTN Corp.), 20 August 1993 (20.08.1993), paragraphs [0005], [0015]-[0017] and [0031], fig. 1 (Family: none)) sets forth a retainer for a rolling bearing, "which is obtained by molding a carbon fiber composite material that is obtained by reinforcing a polymer compound serving as a matrix with a carbon fiber material, and which is characterized in that: the carbon fiber material is composed of a fiber bundle of 1000-5000 monofilaments or a woven fabric or unidirectional material using the fiber bundle; and the polymer compound is a thermosetting resin (hereinafter referred to as 'Configuration A')". The invention of claim 1 of this international application is not novel over the invention set forth in document 1, and thus does not have a special technical feature. Judging from the special technical features of the claims dependent on claim 1 at the time of the order for payment of additional search fees, this international application is considered to contain the following eleven groups of inventions respectively linked by the special technical features mentioned below.
 In this connection, the invention of claim 1, which does not have a special technical feature, is considered to fall under invention group 1.

(Invention group 1) the inventions of claims 1 and 2
A retainer for a rolling bearing, "which is characterized by Configuration A and is also characterized in that the glass transition temperature of the thermosetting resin after curing is not less than 200°C".

(Invention group 2) the inventions of claims 3-5
A retainer for a rolling bearing, "which is characterized by Configuration A and is also characterized in that: the thermosetting resin is an imide resin that contains an aromatic imide bond within each molecule; the imide resin is an added imide resin; and the added imide resin is a bismaleimide resin".

(Invention group 3) the inventions of claims 6-8
A retainer for a rolling bearing, "which is characterized by Configuration A and is also characterized in that: the imide resin is an aromatic polyimide oligomer resin; the aromatic polyimide oligomer resin is an unsymmetrical imide resin wherein the aromatic surface is a nonplanar surface due to the steric structure in which the molecular chain is bent and twisted; and the unsymmetrical imide resin is an imide resin that contains a biphenyl tetracarboxylic acid anhydride as an acid anhydride component".

(Invention group 4) the inventions of claims 9 and 10
A retainer for a rolling bearing, "which is characterized by Configuration A and is also characterized in that: the imide resin is a solvent-soluble resin that contains an aromatic imide bond within each molecule; and the solvent-soluble resin is a polyamideimide resin or a polyimide resin that contains a polyamic acid within each molecule".

(Invention group 5) the invention of claim 11
A retainer for a rolling bearing, "which is characterized by Configuration A and is also characterized in that the thermosetting resin is a resin that contains at least 80% by mass of an imide resin that contains an aromatic imide bond within each molecule".

(Continued to next sheet)

Form PCT/ISA/210 (extra sheet) (July 2009)

| INTERNATIONAL SEARCH REPORT | International application No. |
| --- | --- |
| | PCT/JP2011/072155 |

(Invention group 6) the invention of claim 12
A retainer for a rolling bearing, "which is characterized by Configuration A and is also characterized in that the thermosetting resin is an acid anhydride-cured epoxy resin".

(Invention group 7) the invention of claim 13
A retainer for a rolling bearing, "which is characterized by Configuration A and is also characterized in that the fiber diameter of the monofilament is 4-10 μm".

(Invention group 8) the invention of claim 14
A retainer for a rolling bearing, "which is characterized by Configuration A and is also characterized in that the woven fabric is a plain-woven fabric".

(Invention group 9) the inventions of claims 15-17
A retainer for a rolling bearing, "which is characterized by Configuration A and is also characterized in that: the carbon fiber material is contained in an amount of 45-80% by volume relative to the entire carbon fiber composite material; the carbon fiber composite material has a bending strength at 25°C of not less than 600 MPa and a bending strength retention ratio at 200°C of not less than 50% of the value of the bending strength at 25°C; and the carbon fiber composite material has an elastic modulus at 25°C of not less than 35 GPa and an elastic modulus retention ratio at 200°C of not less than 50% of the value of the elastic modulus at 25°C".

(Invention group 10) the invention of claim 18
A retainer for a rolling bearing, "which is characterized by Configuration A and is also characterized in that the retainer is obtained by a resin transfer molding method using the carbon fiber composite material".

(Invention group 11) the inventions of claims 19-24
A retainer for a rolling bearing, "which is characterized by Configuration A and is also characterized in that: the rolling bearing comprises an inner ring, an outer ring, a plurality of rolling bodies interposed between the inner and outer rings and a retainer for holding the rolling bodies; the rolling bearing is used in applications wherein the DN value is not less than 1,500,000 and the service temperature is not less than 200°C; the rolling bearing is a bearing for a jet engine main shaft that is mounted in an air plane; the rolling bearing is a cylindrical roller bearing or a ball bearing; the surface roughness of a pocket portion of the retainer is 0.8-6.5 μmRa (inclusive), said pocket portion being in sliding contact with the rolling bodies; and the surface roughness of the inner diameter surface and/or the outer diameter surface of the retainer is 0.8-6.5 μmRa (inclusive)".

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5008042 A
- JP 2010001971 A
- JP 2006117788 A
- JP 2004332899 A

**Non-patent literature cited in the description**

- Rolling Bearing Engineering. January 1978, 362